# FASCICULE DE BREVET EUROPEEN

(11) **EP 1 084 055 B1**
(45) Date de publication et mention de la délivrance du brevet: **08.05.2002**
(21) Numéro de dépôt: 99922243.3
(22) Date de dépôt: 01.06.1999
(51) Int. Cl.: B62D 65/00

(54) **PROCEDE DE REALISATION D'UNE CARROSSERIE AUTOMOBILE**
HERSTELLUNGSVERFAHREN EINER AUTOKAROSSERIE
METHOD FOR MAKING A MOTOR CAR BODY

(30) Priorité: 09.06.1998 FR 9807223
(43) Date de publication de la demande: 21.03.2001
(73) Titulaire: ABB Body in White, 95250 Beauchamp (FR)
(72) Inventeur: MALATIER, François, F-95150 Taverny (FR)
(74) Mandataire: Robert, Jean-Pierre
(86) Numéro de dépôt international: FR9901280
(87) Numéro de publication internationale: WO9964289

(56) Documents cités:
- WO-A-95/19868
- US-A- 4 973 817

## Description

La présente invention concerne un procédé de réalisation d'une carrosserie automobile permettant d'alléger au maximum l'outillage dans les postes d'assemblage afin d'autoriser l'emploi de robots comme outils de mise en géométrie de la carrosserie au poste de soudure et/ou outils de manutention des sous-ensembles de carrosserie à assembler.

Dans les lignes d'assemblage de carrosserie d'automobile actuelles, on assure la mise en géométrie des sous-ensembles les uns par rapport aux autres et par rapport aux robots de soudure au moyen d'outillages rigides et lourds. En effet, les pièces de carrosserie sont par nature déformables lorsqu'elles sont soumises à des contraintes et les outillages qu'on utilise pour réaliser une carrosserie de géométrie déterminée et reproductible, ont une double fonction : d'abord de constituer une armature pour chacun des sous-ensembles déformables afin de les rigidifier et ensuite de constituer une interface stable permettant une mise en position précise dans un référentiel fixe qui est celui des robots de soudure.

Plus précisément on distingue aujourd'hui deux grandes familles de postes d'assemblage par soudure d'une carrosserie de véhicule automobile. Dans la première famille, la carrosserie pénètre préagrafée dans un poste et les outils maintiennent cette carrosserie en géométrie. Dans la deuxième famille la carrosserie est amenée dans un poste par sous-ensembles au moyen de châssis et ceux-ci sont maintenus en géométrie soit comme précédemment par des outils appartenant aux postes de soudure, soit par une interlocalisation des châssis les uns par rapport aux autres sur une base qui est elle-même référencée dans le poste de soudure.

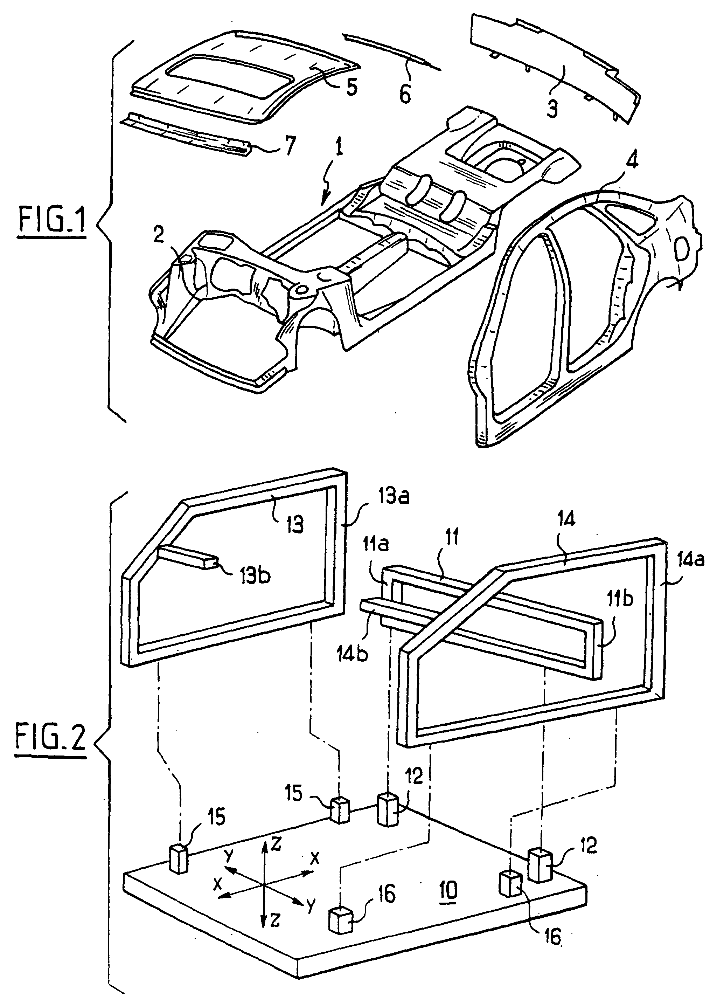

Pour illustrer les principaux sous-ensembles qui constituent une carrosserie de véhicule on se reportera a la figure 1 dans laquelle on a représenté un soubassement 1 qui forme la structure inférieure de la carrosserie avec à l'avant un compartiment moteur 2 qui est une structure en caisson possédant en elle-même une rigidité relativement importante.

Un autre sous-ensemble est constitué par une jupe arrière 3 et destinée à être fixée au soubassement et à la partie arrière de deux côtés de caisse tels que 4 (un seul est représenté à la figure 1), ces côtés de caisse étant également assemblés latéralement au soubassement 1. En partie supérieure, un quatrième groupe d'éléments comprenant un panneau de toit 5 et deux traverses 6 et 7 s'étend entre les deux côtés de caisse et plus exactement entre les deux parties supérieures de ces côtés de caisse tels que 4 appelés brancards.

Dans la première famille, l'ensemble représenté est déjà pré-assemblé et parvient au poste de soudage sur une base qui supporte de manière référencée le soubassement 1. Les outils de mise en géométrie sont alors constitués par des cadres qui sont approchés de cette structure pour s'y atteler et qui sont dans le même temps maintenus dans des positions repérées soit dans un bâti général, soit par interverrouillage. Un exemple de cette famille est foumi par le document US-4973817.

Dans la seconde famille, le soubassement parvient seul au poste de soudage sur une base dans laquelle il est référencé et qui est elle-même placée avec précision dans la référentiel du poste, tandis que les autres sous-ensembles sont chacun associés à un châssis (en général un cadre avec des pinces de fixation des sous-ensembles) qui sont assemblés sur la base et positionnés par rapport à celle-ci soit au moyen d'outils extérieurs appartenant à un bâti général soit par interverrouillage mutuel pour former une boîte "rigide" indéformable dans laquelle les sous-ensembles sont en position correcte les uns par rapport aux autres et par rapport au robot de soudage pour être soudés. Un exemple de cette seconde famille peut être trouvé dans le document WO-95/19868 qui décrit un procédé et le dispositif connexe de mise en positionnement relatif d'éléments de carrosserie automobile, présentant les étapes primaires de la méthode revendiquée dans la revendication 1 de la présente demande sans toutefois utiliser des moyens d'entretoisement.

L'inconvénient majeur de ces postes de soudage réside dans le poids et l'encombrement importants des outillages de mise en géométrie qui, d'une part, limitent les accès pour les robots de soudage et d'autre part - et surtout - demandent la mise en oeuvre de moyens de leur manutention qui doivent être robustes et donc également encombrants. Il n'est aujourd'hui pas possible d'utiliser pour cette manutention des robots dont on sait que la charge maximale ne peut excéder 250 à 350 kg.

La présente invention naît de l'observation selon laquelle les plus grandes difficultés de mise en géométrie d'une carrosserie de véhicule automobile se situent à l'extrémité du soubassement opposé au compartiment-moteur, c'est-à-dire à un endroit où le soubassement lui-même est relativement déformable. En revanche, du côté du compartiment moteur de ce soubassement, on s'est aperçu qu'il pouvait être utile, voire suffisant, de profiter de la raideur de celui-ci puisque ce compartiment-moteur est en forme de caisson quasiment indéformable, du moins en regard des efforts mis en oeuvre dans le maintien des sous-ensembles assemblés dans un poste de soudage avant ou au cours de la soudure.

Ainsi, la présente invention a pour objet un procédé de réalisation d'une carrosserie automobile comportant au moins une étape d'assemblage d'un soubassement avec des côtés de caisse, le soubassement comportant un compartiment-moteur rigide à une extrémité et étant placé dans une position déterminée dans un repère orthogonal de directions X Y Z d'un poste d'assemblage, procédé qui consiste à réaliser la mise en place et le maintien en position des côtés de caisse dans le repère du poste au moyen de deux outils parallèles coopérant chacun avec un côté de caisse et au moins un outil transversal à ces outils parallèles, les trois outils étant liés les uns aux autres et au référentiel du poste de manière que l'outil transversal soit place et maintenu dans une position précise et verrouillée dans ce repère et qu'il forme un outil d'entretoisement et de contreventement dans la direction Y pour les deux outils parallèles dans une zone éloignée du compartiment-moteur de soubassement, ce procédé consistant en outre à maintenir un effort d'application de chacun des outils parallèles au moins contre les côtés latéraux du compartiment moteur du soubassement durant l'assemblage des côtés de caisse à ce soubassement.

Il existe différentes manières de fixer et maintenir l'outil transversal dans une position précise et verrouillée dans le repère du poste. Ainsi on peut placer cet outil dans des organes de réception appartenant au poste (ou au support de soubassement) de sorte que tous ses degrés de liberté soient immobilisés. Les outils parallèles ne participent pas à ce maintien. Dans un autre cas, ils peuvent participer à ce maintien par exemple en étant immobilisés en X et en Z dans le repère, l'outil transversal étant uniquement immobilisé en Y et coopérant avec les outils parallèles pour être immobilisé en X et Z. On peut trouver de nombreuses variantes pour réaliser cette fixation et ce maintien de l'outil transversal sans sortir du cadre de l'invention.

Ce procédé est applicable dans chacune des deux grandes familles d'assemblage d'une carrosserie automobile. En effet dans le cas où les deux côtés de caisse parviennent au poste de soudurepré-assemblées au soubassement, un mode opératoire pourrait être le suivant : l'outil transversal est approché de la carrosserie pré-assemblée pour prendre en charge la jupe arrière si elle existe, et ensuite être complètement immobilisé dans le repère du poste ; puis les outils latéraux parallèles sont approchés des côtés de caisse qu'ils prennent en charge et rigidifient au moyen des pinces de préhension qu'ils comportent à cet effet de manière connue, puis sont immobilisés dans les directions X et Z sur des supports que possède le poste, voire pour l'une ou l'autre de ces immobilisations par l'intermédiaire de l'outil transversal et en Y par coopération avec l'outil transversal par l'une de leurs extrémités tandis qu'un moyen de poussée est mis en service vers leur autre extrémité proche du compartiment-moteur pour plaquer les côtés de caisse contre ce compartiment. Ce moyen de poussée peut être un simple vérin s'étendant entre le poste et chacun des outils latéraux tout en pouvant être effacé au moment de l'accostage ou de retrait de ces outils.

Dans certaines carrosseries, il n'y a pas de jupe arrière mise en oeuvre ; aussi, l'outil transversal est-il uniquement là pour servir d'entretoisement d'appui et de contreventement des outils parallèles à l'arrière de la carrosserie.

Dans la deuxième famille de poste d'assemblage, les outils constituent des supports pour la jupe arrière et les côtés de caisse par exemple, et sont amenés chargés de ces sous-ensembles dans le poste de soudure où ils sont mis en place par exemple comme précédemment mentionné.

Dans certaines applications il peut être avantageux de prévoir des outils latéraux équipés du côté de leur extrémité voisine du compartiment-moteur, d'éléments d'appui mutuels qui viennent au contact l'un de l'autre sous l'effet de la poussée dans la direction Y qu'ils subissent, ce dans le cas où la rigidité du compartiment moteur serait jugée insuffisante, ou pour prévenir un écrasement trop important de ce compartiment moteur entre les deux outils. Ces éléments d'appuis peuvent comporter des moyens de liaison verrouillée qui pourraient soulager les vérins de poussée de l'effet d'efforts sur la carrosserie tendant à écarter les côtés de caisse l'un de l'autre.

D'autres caractéristiques et avantages ressortiront de la description donnée ci-après à titre d'exemple d'un mode de réalisation de l'invention.

Il sera fait référence aux dessins annexés dans lesquels, étant rappelé que la figure 1 illustre une structure type de carrosserie de véhicule,
- la figure 2 est un schéma pour illustrer le procédé selon l'invention,
- et la figure 3 est une vue schématique d'un poste d'assemblage et de soudage dans lequel le procédé de l'invention est mis en oeuvre.

A la figure 2 on a représenté en 10 un bâti fixe d'un poste d'assemblage de carrosserie de véhicule qui possède un repère X, Y, Z. Dans ce bâti on peut apporter un support pour le soubassement 1 d'une caisse de véhicule automobile. Les moyens pour apporter ce support et le mettre en position dans le repère X, Y, Z sont connus en eux-mêmes et ne sont pas représentés. Ce support peut par exemple être constitué par une palette qui circule au moyen d'un convoyeur traversant le bâti 10 le long de la direction X, des moyens d'élévation étant prévus dans le bâti pour désolidariser la palette du convoyeur et la mettre en référence dans le repère X, Y, Z. Un outil transversal au sens du procédé selon l'invention est symbolisé sous la forme d'un cadre 11 transversal à la direction X et susceptible d'être attelé au bâti 10 par l'intermédiaire par exemple de plots de support 12, ces plots et le cadre 11 étant pourvus de moyens pour coopérer afin que le cadre 11 soit immobilisé en X, Y, Z, de sorte que les six degrés de liberté du cadre par rapport au poste soient supprimés (les trois translations selon X, Y et Z et les trois rotations autour de ces directions). Des outils latéraux parallèles en forme de cadre 13 et 14 peuvent ensuite être placés dans le bâti 10. Ces outils latéraux reposeront respectivement sur des plots 15 et 16, ce qui fixe leur position dans la direction Z et sont appuyés par leurs montants arrières 13a et 14a contre les montants verticaux 11a et 11b du cadre 11, ce qui fixe leur position en Y au moins pour la partie arrière. Entre les montants 11a, 11b, 13a et 14a, il peut exister des moyens de verrouillage qui maintiennent les cadres 13 et 14 dans une position verticale entretoisée et contreventée par le cadre 11, et qui peuvent également servir à fixer les cadres 13 et 14 dans leur position le long de la direction X. Cette fixation selon la direction X peut être également assurée par tout moyen porté par l'un des plots 15 ou 16 et coopérant avec les cadres 13 et 14 (pilote, drageoir, ...).

De manière analogue on peut prévoir que les cadres 13 et 14 constituent les éléments de blocage en X et Z du cadre 11 qui lui ne coopèrerait directement avec le bâti 10 que par un plot l'immobilisant en Y (par exemple par un pilote d'axe Z).

La partie des cadres 13 et 14 opposée aux montants 13a et 14a, n'est pas immobilisée en Y. On peut donc les rapprocher l'un de l'autre en exerçant un effort selon la direction Y sur cette partie avant. Des extensions 13b et 14b parallèles à la direction Y, solidaires des cadres 13 et 14, constituent des moyens d'appui mutuels de ceux-ci limitant leur rapprochement et, le cas échéant, permettant leur liaison.

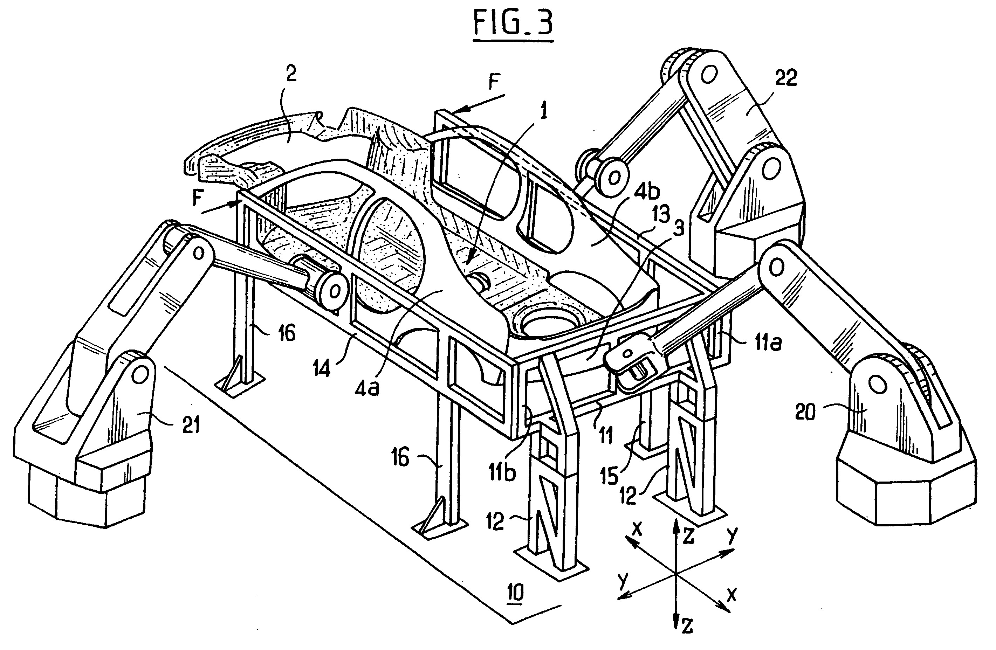

A la figure 3 on retrouve certains des éléments déjà décrits avec les mêmes références. Le cadre 11 est ici équipé sur l'une de ses faces, de moyens de préhension et de manipulation pour un robot 20 de sa manutention. Sur son autre face, le cadre 11 possède des pinces pour coopérer avec la jupe 3. Cette coopération peut se faire au moment où on met en place le cadre 11 dans le bâti du poste 10, la jupe 3 étant alors pré-assemblée au soubassement 1 et aux côtés de caisse 4a et 4b déjà mis en place dans le bâti du poste. Ces pinces peuvent aussi constituer des moyens d'attelage du cadre 11 et de la jupe 3, mis en oeuvre à l'extérieur de la ligne d'assemblage, le cadre 11 constituant alors une sorte de palette de transport de la jupe 3 que le robot 20 vient mettre en place dans le poste d'assemblage. On aura noté à cette figure que les plots 12 coopèrent avec le cadre 11 par quatre points de fixation qui permettent d'assurer une immobilisation complète du cadre 11 dans le bâti 10 tant en translation le long des directions X, Y, Z qu'en rotation autour de celles-ci.

Le cadre latéral 14 est amené dans le poste 10 par un robot 21. Il repose sur les plots 16 et s'appuie contre le montant 11b du cadre 11 où il y est verrouillé par des moyens non représentés. Le cadre 14 est équipé du côté de caisse 4a. De la même manière le cadre 13 est amené au poste par un robot 22 et repose sur les plots 15 et est appuyé contre le montant 11a d'extrémité du cadre 11 et Y est verrouillé.

On comprend que la partie arrière des côtés de caisse 4a et 4b est ainsi parfaitement mise en position par rapport au soubassement et ce, de manière très rigide grâce à des moyens simples et légers.

La mise en position des côtés de caisse à l'avant du soubassement est assurée par une simple poussée F des cadres 13 et 14 l'un en direction de l'autre et donc contre le compartiment moteur 2 rigide du soubassement 1.

On procède alors à la liaison ou au complément de liaison des côtés de caisse et du soubassement par soudage par points au moyen de robots non représentés dont on voit qu'ils disposent de zones d'accès importantes pour effectuer leur travail.

La mise en place des panneaux de toit et des traverses représentés à la figure 1 entre les côtés de caisse peut être réalisée dans le même poste ou dans un poste suivant. Pour ce faire, il suffit de placer la structure de pavillon, c'est-à-dire le panneau de toit 5 et les traverses 6 et 7 entre les brancards (partie supérieure) des côtés de caisse 4a et 4b au moyen d'un châssis du genre cadre, de rapprocher les côtés de caisse l'un vers l'autre donc contre la structure de toit et de souder. Il est en effet illusoire de fixer par rapport à un repère de référence fixe la géométrie du haut de la carrosserie car la géométrie finale de cette partie supérieure de la carrosserie dépend de l'équilibre des forces élastiques entre la partie supérieure des côtés de caisse qui est à grande déformation élastique et la structure de pavillon du véhicule.

Comme le cadre 11 pour la jupe 3, les cadres 13 et 14 peuvent opérer avec les côtés de caisse soit comme moyen de manutention de ceux-ci pour les amener au poste d'assemblage général, soit comme moyens de leur mise en géométrie si la carrosserie est amenée pré-assemblée au poste d'assemblage.

## Revendications

1. Procédé de réalisation d'une carrosserie automobile comportant une étape d'assemblage d'un soubassement (1) avec des côtés de caisse (4a, 4b), le soubassement (1) comportant un compartiment moteur rigide (2) à une extrémité et étant placé dans une position précise déterminée dans un repère orthogonal de directions X, Y, Z d'un poste d'assemblage, **caractérisé en ce qu'**il consiste à réaliser la mise en place et le maintien en position des côtés de caisse (4a, 4b) dans le référentiel du poste au moyen de deux outils parallèles (13, 14) coopérant chacun avec un côté de caisse (4a, 4b) et au moins un outil transversal (11) à ces outils parallèles, les trois outils étant liés les uns aux autres et au repère X Y Z du poste de manière que l'outil transversal (11) soit placé et maintenu dans une position précise et verrouillée dans ce repère et qu'il forme un outil d'entretoisement et de contreventement dans la direction Y pour les deux outils parallèles (13, 14) dans une zone éloignée du compartiment-moteur (2) du soubassement (1) et **en ce qu'**il consiste à maintenir un effort d'application (F) de chacun des outils parallèles (13, 14) au moins contre les côtés latéraux du compartiment-moteur (2) du soubassement (1) durant l'assemblage des côtés de caisse à ce soubassement.

2. Procédé selon la revendication 1, **caractérisé en ce qu'**on utilise les outils parallèles (13, 14) comme organe d'amenée des côtés de caisse (4a, 4b) au contact du soubassement (1).

3. Procédé selon la revendication 1, **caractérisé en ce qu'**on utilise les outils (13, 14) parallèles comme organe de maintien en géométrie des côtés de caisse (4a, 4b) préalablement reliés sommairement au soubassement (1).

4. Procédé selon l'une des revendications précédentes, **caractérisé en ce que** l'outil transversal (11) est utilisé comme organe d'amenée d'une jupe (3) arrière de la carrosserie.

5. Procédé selon l'une des revendications précédentes, **caractérisé en ce qu'**on utilise les outils parallèles (13, 14) possédant, au niveau du compartiment moteur (2) du soubassement (1), des moyens (13b, 14b) d'appui mutuel en direction Y.

## Patentansprüche

1. Verfahren zum Herstellen einer Kraftfahrzeugkarosserie, umfassend einen Montageschritt zur Montage eines Fahrzeugbodens (1) an Karosserieseitenteile (4a, 4b), wobei der Fahrzeugboden (1) an einem Ende einen steifen Motorraum (2) hat und in eine genaue, vorgegebene Position in einem orthogonalen Bezugssystem mit den Richtungen X, Y, Z einer Montagestelle eingesetzt wird, **dadurch gekennzeichnet, daß** das Verfahren darin besteht, die Karosserieseitenteile (4a, 4b) in das Bezugssystem der Montagestelle einzusetzen und in ihrer Position zu halten, mit Hilfe von zwei parallelen Werkzeugen (13, 14), die jeweils mit einem Karosserieseitenteil (4a, 4b) zusammenwirken, und mindestens einem zu diesen parallelen Werkzeugen transversalen Werkzeug (11), wobei die drei Werkzeuge miteinander und mit dem Bezugssystem X Y Z der Montagestelle derart verbunden sind, daß das transversale Werkzeug (11) in eine genaue und in diesem Bezugssystem arretierte Position eingesetzt und dort gehalten wird und daß es eine Vorrichtung zur Verstrebung und Versteifung in der Y-Richtung für die beiden parallelen Werkzeuge (13, 14) in einem vom Motorraum (2) des Fahrzeugbodens (1) entfernten Bereich bildet, und darin, eine von jedem der parallelen Werkzeuge (13, 14) mindestens auf die Seitenteile des Motorraums (2) des Fahrzeugbodens aufgebrachte Kraft (F) während der Montage der Karosserieseitenteile mit diesem Fahrzeugboden aufrechtzuerhalten.

2. Verfahren nach Anspruch 1, **dadurch gekennzeichnet, daß** man die parallelen Werkzeuge (13, 14) als Organe zum Zuführen der Karosserieseitenteile (4a, 4b) bis zum Kontakt mit dem Fahrzeugboden (1) verwendet.

3. Verfahren nach Anspruch 1, **dadurch gekennzeichnet, daß** man die parallelen Werkzeuge (13, 14) als Organe zum Aufrechterhalten der Geometrie der Karosserieseitenteile (4a, 4b) verwendet, die zuvor grob mit dem Fahrzeugboden (1) verbunden worden sind.

4. Verfahren nach einem der vorhergehenden Ansprüche, **dadurch gekennzeichnet, daß** das transversale Werkzeug (11) als Organ zum Zuführen einer Ladekante (3) der Karosserie verwendet wird.

5. Verfahren nach einem der vorhergehenden Ansprüche, **dadurch gekennzeichnet, daß** man die parallelen Werkzeuge (13, 14) verwendet, die im Bereich des Motorraums (2) des Fahrzeugbodens (1) Mittel (13b, 14b) zur gegenseitigen Anlage in Y-Richtung haben.

## Claims

1. A method of making car bodywork, the method including a step of assembling body sides (4a, 4b) to an underbody (1), the underbody (1) including a rigid engine compartment (2) at one end and being placed in an assembly station in a precise position determined in an orthogonal frame of reference having directions X, Y, and Z, the method being **characterized in that** it consists in putting the body sides (4a, 4b) into position and holding them in position in the frame of reference of the station by means of two parallel tools (13, 14) each co-operating with a respective body side (4a, 4b), and at least one transverse tool (11) extending transversely to said parallel tools, the three tools being connected to one another and to the X, Y, Z frame of reference of the station in such a manner that the transverse tool (11) is placed and held in a position that is precise and locked in the frame of reference and that it forms a spacer and bracing tool in the Y direction for the two parallel tools (13, 14) in a zone that is remote from the engine compartment (2) of the underbody (1), and **in that** it consists in maintaining a force (F) pressing each of the parallel tools (13, 14) at least against the sides of the engine compartment (2) of the underbody (1) while the body sides are being assembled to the underbody.

2. A method according to claim 1, **characterized in that** the parallel tools (13, 14) are used as members for bringing the body sides (4a, 4b) into contact with the underbody (1).

3. A method according to claim 1, **characterized in that** the parallel tools (13, 14) are used as members for holding the body sides (4a, 4b) in position after they have been lightly tacked to the underbody (1).

4. A method according to any preceding claim, **characterized in that** the transverse tool (11) is used as a member for bringing in the rear lower panel (3) of the bodywork.

5. A method according to any preceding claim, **characterized in that** parallel tools (13, 14) are used that possess means (13b, 14b) for bearing against each other in the Y direction in the vicinity of the engine compartment (2) of the underbody (1).
